# EUROPÄISCHE PATENTANMELDUNG

(11) **EP 3 670 682 A1**
(43) Veröffentlichungstag der Anmeldung: **24.06.2020**
(21) Anmeldenummer: 18214608.4
(22) Anmeldetag: 20.12.2018
(51) Int. Cl.: C21D 8/02, C21D 11/00, C21D 9/573, C21D 9/60, C21D 1/22, C21D 1/40, C21D 1/62, C21D 1/667, B21B 45/02

(54) **HERSTELLEN EINES METALLBANDES MIT EINEM AUSTENIT-MARTENSIT-MISCHGEFÜGE**

(71) Anmelder: Primetals Technologies Austria GmbH, 4031 Linz (AT)
(72) Erfinder: Maierl, Josef, 4501 Neuhofen an der Krems (AT); Opitz, Erich, 7123 Mönchhof (AT); Pichler, Lukas, 4040 Linz (AT); Rimnac, Axel, 4020 Linz (AT); Seilinger, Alois, 4040 Linz (AT)
(74) Vertreter: Metals@Linz

(57) **Zusammenfassung**

Die Erfindung betrifft ein Verfahren zum Herstellen eines ein Austenit-Martensit-Mischgefüge aufweisenden Metallbandes (4) aus einem Walzprodukt (46), bei dem das Walzprodukt (46), welches zunächst eine Temperatur (T) aufweist, die oberhalb der Martensit-Starttemperatur (Mₛ) des Walzprodukts (46) liegt, bei einem Kühlvorgang derart abgekühlt wird, dass die Temperatur (T) des Walzprodukts (46) auf einen Temperaturwert zwischen der Martensit-Starttemperatur (Mₛ) und der Martensit-Stopptemperatur (M_{f}) des Walzprodukts (46) gebracht wird. Um homogene Materialeigenschaften des Metallbandes (4) zu erreichen, wird vorgeschlagen, dass das Walzprodukt (46) ein Warmband ist und das Walzprodukt (46) bei dem Kühlvorgang mithilfe einer Druckkühlanlage (34) abgekühlt wird. Außerdem betrifft die Erfindung eine Fertigungsanlage (8a-8e) zur Durchführung des Verfahrens sowie eine Gießwalzverbundanlage (2a-2d).

## Beschreibung

Die Erfindung betrifft ein Verfahren und eine Fertigungsanlage zum Herstellen eines ein Austenit-Martensit-Mischgefüge aufweisenden Metallbandes aus einem Walzprodukt. Des Weiteren betrifft die Erfindung eine Gießwalzverbundanlage.

Metalle mit einem Austenit-Martensit-Mischgefüge, wie zum Beispiel sogenannte Quenching-and-Partitioning-Stähle, zeichnen sich durch die Kombination einer hohen Zugfestigkeit und einer hohen Bruchdehnung aus. Derartige Metalle werden insbesondere im Automobilbau verwendet. Bei einem solchen Mischgefüge gewährleistet der Austenit die hohe Bruchdehnung, während der Martensit die hohe Zugfestigkeit gewährleistet.

In zahlreichen Teilgebieten der Metallverarbeitungsbranche werden homogene Materialeigenschaften des zu verarbeitenden Metalls gefordert, insbesondere um homogene Eigenschaften des Endprodukts sicherstellen zu können.

Bei einem Metall mit einem Austenit-Martensit-Mischgefüge hängt die Homogenität der beiden zuvor genannten Eigenschaften, d. h. der Bruchdehnung und der Zugfestigkeit, wesentlich von der Homogenität des Mischgefüges ab. Mit anderen Worten, die Homogenität der Bruchdehnung und der Zugfestigkeit bei einem Metall mit einem Austenit-Martensit-Mischgefüge hängt davon ab, wie homogen der Austenit und der Martensit in dem Mischgefüge verteilt sind.

Eine Aufgabe der Erfindung ist es, die Herstellung eines ein Austenit-Martensit-Mischgefüge aufweisenden Metallbandes mit homogenen Materialeigenschaften zu ermöglichen.

Diese Aufgabe wird erfindungsgemäß gelöst durch ein Verfahren nach Anspruch 1, durch eine Fertigungsanlage nach Anspruch 13 sowie durch eine Gießwalzverbundanlage nach Anspruch 19.

Bevorzugte Ausgestaltungen der Erfindung sind in den weiteren Patentansprüchen sowie in der nachfolgenden Beschreibung angegeben.

Bei dem erfindungsgemäßen Verfahren zum Herstellen eines ein Austenit-Martensit-Mischgefüge aufweisenden Metallbandes aus einem Walzprodukt ist vorgesehen, dass das Walzprodukt, welches zunächst eine Temperatur aufweist, die oberhalb der Martensit-Starttemperatur des Walzprodukts liegt, bei einem Kühlvorgang derart abgekühlt wird, dass die Temperatur des Walzprodukts auf einen Temperaturwert zwischen der Martensit-Starttemperatur und der Martensit-Stopptemperatur des Walzprodukts gebracht wird. Weiter ist erfindungsgemäß vorgesehen, dass das Walzprodukt ein Warmband ist und das Walzprodukt bei dem Kühlvorgang mithilfe einer Druckkühlanlage abgekühlt wird.

Die Erfindung beruht auf der Überlegung, dass ein Metallband mit einem Austenit-Martensit-Mischgefüge bislang aus einem Kaltband hergestellt wird. Hierbei ist es erforderlich, das Kaltband durch Erwärmen in die austenitische Phase zu bringen, was mit einem hohen Energieverbrauch einhergeht. Anschließend erfolgt eine Abkühlung des erwärmten Kaltbandes auf einen Temperaturwert, der zwischen der Martensit-Start-temperatur und der Martensit-Stopptemperatur des Bandes liegt.

Dadurch, dass bei der Erfindung das ein Austenit-Martensit-Mischgefüge aufweisende Metallband aus einem Warmband und nicht aus einem Kaltband hergestellt wird, ist es möglich, auf das besagte anfängliche Erwärmen des Bandes, welches bei der Herstellung aus Kaltband erforderlich ist, zu verzichten. Auf diese Weise kann bei der Herstellung des ein Austenit-Martensit-Mischgefüge aufweisenden Metallbandes Energie gespart werden. Zudem kann die Herstellungsdauer des Metallbandes verkürzt werden.

Ferner beruht die Erfindung auf der Erkenntnis, dass die Homogenität der Materialeigenschaften des Metallbandes, welche von der Homogenität der Gefügebestandteile des Mischgefüges abhängig ist, in erheblichem Maße davon abhängt, wie homogen die beim Kühlvorgang erreichte Temperatur des Walzprodukts ist. Je höher die Homogenität der beim Kühlvorgang erreichten Temperatur ist, desto homogenere Materialeigenschaften des Metallbandes lassen sich erreichen.

Um eine homogene Temperatur des Walzprodukts beim Kühlvorgang zu erreichen, ist beim Kühlvorgang eine präzise Temperaturführung/-einstellung über die Zeit erforderlich. Zu diesem Zweck sieht die Erfindung die Verwendung einer Druckkühlanlage (auch Power Cooling Anlage genannt) vor.

Mit einer Druckkühlanlage kann, verglichen mit einer Laminarkühlanlage oder einer anderen Art von Kühlvorrichtung, eine bessere räumliche Homogenität der Kühlwirkung beim Kühlvorgang erzielt werden. Dies kann insbesondere darauf zurückgeführt werden, dass bei Verwendung einer Druckkühlanlage das Auftreten des sogenannten Leidenfrost-Effektes beim Kühlvorgang (also das unerwünschte lokale Zusammenbrechen eines Kühlmitteldampffilmes an der Oberfläche des Walzprodukts, welches kleinräumig zu starken Variationen der Kühlwirkung führen kann) vermieden werden kann.

Zudem kann bei Verwendung einer Druckkühlanlage, verglichen mit einer Laminarkühlanlage oder einer anderen Art von Kühlvorrichtung, ein höherer Wärmeübergang zwischen dem Walzprodukt und einem auf das Walzprodukt aufgebrachten Kühlmittel erzielt werden, da bei einer Druckkühlanlage das Kühlmittel mit einer hohen Auftragsgeschwindigkeit auf das Walzprodukt trifft, sodass es zu turbulenten Strömungsverhältnissen an der Oberfläche des Walzprodukts und somit zu einer besseren Wärmeabfuhr kommt.

Unter einem Austenit-Martensit-Mischgefüge ist vorliegend ein Gefüge zu verstehen, dass sowohl Austenit als auch Martensit als Gefügebestandteile enthält. Zusätzlich zu den beiden Gefügebestandteilen Austenit und Martensit kann das Austenit-Martensit-Mischgefüge ein oder mehrere weitere Gefügebestandteile, wie zum Beispiel Ferrit, enthalten.

Unter einem Walzprodukt ist ein gewalztes Metallprodukt, insbesondere nach einem Walzvorgang in einer Fertigwalzstraße, zu verstehen. Da es sich bei dem Walzprodukt bei der vorliegenden Erfindung um ein Warmband handelt, ist das weiter oben erwähnte Walzprodukt ein warmgewalztes Metallband.

Vorzugsweise ist das besagte Walzprodukt ein Stahlwalzprodukt, also ein Walzprodukt aus Stahl. In diesem Fall ist das ein Austenit-Martensit-Mischgefüge aufweisende Metallband ein Stahlband.

Vorteilhafterweise wird eine Kühlwirkung der Druckkühlanlage von einer Steuer- oder Regeleinrichtung anhand eines Steuer-oder Regelmodells gesteuert oder geregelt. In bevorzugter Weise wird die Kühlwirkung der Druckkühlanlage dabei in Abhängigkeit eines oder mehrerer Walzproduktparameter gesteuert oder geregelt.

Bei dem/den Walzproduktparameter/-n, in Abhängigkeit dessen/deren von der Steuer- oder Regeleinrichtung die Kühlwirkung der Druckkühlanlage gesteuert oder geregelt wird, kann es sich zum Beispiel um eine chemische Zusammensetzung des Walzprodukts und/oder eine Geschwindigkeit des Walzprodukts und/oder eine Dicke des Walzprodukts und/oder die Temperatur des Walzprodukts handeln.

Der Ausdruck "chemische Zusammensetzung des Walzprodukts" kann sich insbesondere darauf beziehen, welche Legierungselemente das Walzprodukt enthält und wie hoch deren Anteil am Walzprodukt ist.

In bevorzugter Weise ist vorgesehen, dass die Temperatur des Walzprodukts berechnet wird, insbesondere von besagter Steuer- oder Regeleinrichtung. Alternativ oder zusätzlich, insbesondere zum Zwecke einer Verifizierung der berechneten Temperatur, kann die Temperatur des Walzprodukts mithilfe einer oder mehrerer Temperaturmessvorrichtungen gemessen werden. Für die Temperaturmessung werden vorzugsweise berührungslos messende Temperaturmessvorrichtungen, wie zum Beispiel Pyrometer, verwendet.

Der jeweilige Walzproduktparameter, in Abhängigkeit dessen von der Steuer- oder Regeleinrichtung die Kühlwirkung der Druckkühlanlage gesteuert oder geregelt wird, wird vorzugsweise als Input-Parameter an die Steuer- oder Regeleinrichtung übermittelt oder von der Steuer- oder Regeleinrichtung anhand eines oder mehrerer an die Steuer- oder Regeleinrichtung übermittelter Input-Parameter berechnet.

In bevorzugter Weise wird von der Steuer- oder Regeleinrichtung mithilfe des Steuer-/Regelmodells aus der chemischen Zusammensetzung des Walzprodukts dessen Martensit-Starttemperatur und dessen Martensit-Stopptemperatur ermittelt.

Vorteilhafterweise wird von der Steuer- oder Regeleinrichtung mithilfe des Steuer-/Regelmodells diejenige Kühlmittel-Austrittsrate ermittelt, die benötigt wird, um das Walzprodukt mithilfe der Druckkühlanlage auf den gewünschten Temperaturwert abzukühlen. Zweckmäßigerweise wird von der Steuer- oder Regeleinrichtung die Kühlmittel-Austrittsrate der Druckkühlanlage auf den ermittelten Wert der Kühlmittel-Austrittsrate eingestellt.

Bei einer vorteilhaften Ausgestaltung der Erfindung ist vorgesehen, dass die Kühlwirkung der Druckkühlanlage von der Steuer- oder Regeleinrichtung derart gesteuert oder geregelt wird, dass eine Abweichung der Temperatur des Walzprodukts von einer Temperatur-Sollkurve höchstens 15 °C, vorzugsweise höchstens 10 °C, beträgt. Dadurch lässt sich eine besonders gute Homogenität der Materialeigenschaften des Metallbandes erreichen.

Bei besagter Temperatur-Sollkurve handelt es sich vorzugsweise um eine Kurve, die einen Temperatur-Sollwert als Funktion der Zeit oder als Funktion einer Position in Walzprodukt-Förderrichtung beschreibt.

Zweckmäßigerweise wird von der Druckkühlanlage zum Zwecke der Abkühlung des Walzprodukts ein Kühlmittel auf das Walzprodukt aufgebracht, insbesondere mithilfe von Vollstrahldüsen. Um eine gleichmäßige Abkühlung des Walzprodukts zu ermöglichen, wird das Kühlmittel von der Druckkühlanlage vorzugsweise sowohl auf die Oberseite des Walzprodukts als auch auf die Unterseite des Walzprodukts aufgebracht.

Ferner ist es vorteilhaft, wenn das Kühlmittel, welches von der Druckkühlanlage auf das Walzprodukt aufgebracht wird, mit einem Druck von mindestens 0,75 bar, vorzugsweise mindestens 1 bar, besonders bevorzugt mindestens 2 bar, aus der Druckkühlanlage austritt. Zum Beispiel kann das Kühlmittel mit einem Druck von 4 bar aus der Druckkühlanlage austreten. Ein derartige Drücke sind besonders gut geeignet, um eine schnelle und homogene Abkühlung des Walzprodukts zu erreichen und die Entstehung des Leidenfrost-Effektes zu vermeiden.

Bei den zuvor angegebenen sowie den nachfolgend genannten Druckwerten handelt es sich um relative Druckwerte in Bezug auf Umgebungs-/Atmosphärendruck. Im Sinne der Erfindung entspricht also beispielsweise ein Druckwert von 0,75 bar einem Absolutdruck von 1,75 bar.

Weiter ist es vorteilhaft, wenn das Walzprodukt eine Dicke von höchstens 3 mm, vorzugsweise höchstens 1,5 mm, aufweist, insbesondere weil das Walzprodukt bei einer solchen Dicke ein gleichmäßigeres Abkühlverhalten zeigt als bei größeren Dicken.

Des Weiteren kann vorgesehen sein, dass das Walzprodukt bei einem weiteren Kühlvorgang, welcher nach dem erstgenannten Kühlvorgang erfolgt, derart abgekühlt wird, dass die Temperatur des Walzprodukts auf einen Temperaturwert unterhalb der Martensit-Stopptemperatur gebracht wird. Vorzugsweise wird das Walzprodukt beim weiteren Kühlvorgang auf Umgebungstemperatur abgekühlt.

Bei einer vorteilhaften Erfindungsvariante wird das Walzprodukt bei dem weiteren Kühlvorgang mithilfe einer weiteren Druckkühlanlage abgekühlt. Zweckmäßigerweise wird von der weiteren Druckkühlanlage zum Zwecke der Abkühlung des Walzprodukts ein Kühlmittel auf das Walzprodukt aufgebracht. Die weitere Druckkühlanlage wird vorzugsweise von besagter Steuer- oder Regeleinrichtung anhand des zuvor erwähnten Steuer-oder Regelmodells gesteuert oder geregelt, insbesondere in Abhängigkeit desselben bzw. derselben Parameter wie die erstgenannte Druckkühlanlage.

Alternativ oder zusätzlich kann das Walzprodukt bei dem weiteren Kühlvorgang durch Einbringen des Walzprodukts in ein mit einem Kühlmittel gefülltes Kühlbecken abgekühlt werden. In solch einem Fall wird das Walzprodukt vorzugsweise vor dem Einbringen in das Kühlbecken zu einem Bund aufgewickelt und im aufgewickelten Zustand in das Kühlbecken eingebracht.

Der weitere Kühlvorgang muss nicht notwendigerweise ein aktives Aufbringen eines Kühlmittels auf das Walzprodukt oder ein aktives Einbringen des Walzprodukts in ein Kühlmittel umfassen. So kann beispielsweise der weitere Kühlvorgang ein Abkühlenlassen des Walzprodukts an Umgebungsluft sein oder umfassen. Das Abkühlenlassen des Walzprodukts an Umgebungsluft erfolgt vorzugsweise im aufgewickelten Zustand des Walzprodukts, d. h. nachdem das Walzprodukt mittels einer Haspeleinrichtung zu einem Bund aufgewickelt worden ist. Im aufgewickelten Zustand benötigt das Walzprodukt weniger Platz und lässt sich zudem leichter handhaben.

Weiterhin ist es bevorzugt, wenn das Walzprodukt bei dem erstgenannten und/oder bei dem weiteren Kühlvorgang mit einer Geschwindigkeit von höchstens 20 m/s, vorzugsweise höchstens 15 m/s, transportiert wird. Dadurch lässt sich sicherstellen, dass ausreichend Zeit zur Verfügung steht, um das Walzprodukt mithilfe der Druckkühlanlage und/oder der weiteren Druckkühlanlage auf den jeweils gewünschten Temperaturwert abzukühlen.

Bei einer vorteilhaften Ausführungsvariante der Erfindung wird das Walzprodukt zwischen dem erstgenannten und dem weiteren Kühlvorgang bei einem Heizvorgang erwärmt. Der Temperaturwert, der bei dem Heizvorgang erreicht wird, kann zum Beispiel unterhalb der Martensit-Starttemperatur liegen und höher sein als der beim erstgenannten Kühlvorgang erzielte Temperaturwert. Alternativ kann der Temperaturwert, der bei dem Heizvorgang erreicht wird, sogar oberhalb der Martensit-Starttemperatur liegen. Auf welchen Temperaturwert das Walzprodukt beim Heizvorgang aufgeheizt wird, kann insbesondere von der chemischen Zusammensetzung des Walzprodukts abhängen.

Gegebenenfalls wird die Temperatur des Walzprodukts für eine vorgegebene Zeitdauer, die zum Beispiel zwischen 5 und 400 Sekunden betragen kann, auf dem beim Heizvorgang erreichten Temperaturwert gehalten. Durch den Heizvorgang kann - verglichen mit dem Fall, dass das Walzprodukt zwischen den Kühlvorgängen nicht beheizt wird - eine schnellere Stabilisierung des Austenits im Walzprodukt erreicht werden.

Der Heizvorgang wird vorzugsweise von der Steuer- oder Regeleinrichtung anhand des zuvor erwähnten Steuer- oder Regelmodells gesteuert oder geregelt, insbesondere in Abhängigkeit desselben bzw. derselben Parameter wie die erstgenannte Druckkühlanlage.

Gegebenenfalls kann, insbesondere vor der erstgenannten Druckkühlanlage und/oder hinter der weiteren Druckkühlanlage, eine sogenannte Querabspritzung zum Einsatz kommen. Mithilfe einer solchen Vorrichtung kann durch ein schräges Aufspritzen von Kühlmittel auf das Walzprodukt einem Abfließen des von der/den Druckkühlanlage/-n auf das Walzprodukt aufgebrachten Kühlmittels entgegengewirkt werden.

In bevorzugter Weise wird das Verfahren in einer Gießwalzverbundanlage durchgeführt. Die Gießwalzverbundanlage kann dabei insbesondere im sogenannten Endlos-Modus (auch kontinuierlicher Modus genannt) betrieben werden. Vorzugsweise ist das Walzprodukt in diesem Fall ein mithilfe der Gießwalzverbundanlage hergestelltes Endlosmetallband.

Ein Vorteil der Durchführung des Verfahrens in einer Gießwalzverbundanlage ist, dass in einer Gießwalzverbundanlage aufgrund eines permanenten Massenflusses aus ihrer Gießanlage und der vergleichsweise geringen Gießgeschwindigkeit stabile, stationäre Produktionsbedingungen gewährleistet werden können, was sich vor allem in einer konstanten Geschwindigkeit des Walzprodukts und einer vergleichsweise homogenen Temperatur des Walzprodukts in Breiten- und Längsrichtung des Walzprodukts ausdrückt. Beim Abkühlen des Walzprodukts mittels der Druckkühlanlage und/oder mittels der weiteren Druckkühlanlage lässt sich daher eine besonders homogene Temperaturverteilung des Walzprodukts erreichen, insbesondere wenn die Gießwalzverbundanlage im Endlos-Modus betrieben wird.

Ein weiterer Vorteil der Durchführung des Verfahrens in einer Gießwalzverbundanlage ist, dass sich mittels einer Gießwalzverbundanlage die zuvor erwähnten bevorzugten Dicken des Walzprodukts aufwandsgünstig realisieren lassen.

Alternativ kann vorgesehen sein, dass das Verfahren in einem konventionellen Warmwalzwerk durchgeführt wird, d. h. in einem Warmwalzwerk, welches nicht Bestandteil einer Gießwalzverbundanlage ist.

Zweckmäßigerweise umfasst das Warmwalzwerk eine Vorwalzstraße sowie eine Fertigwalzstraße. Zwischen der Vorwalzstraße und der Fertigwalzstraße kann das Warmwalzwerk gegebenenfalls eine Coilbox aufweisen. In diesem Fall kann vorgesehen sein, ein mithilfe der Vorwalzstraße warmgewalztes Vorprodukt, aus welchem mithilfe der Fertigwalzstraße durch Warmwalzen das Walzprodukt hergestellt wird, in der Coilbox aufgewickelt wird und das aufgewickelte Vorprodukt zu einem späteren Zeitpunkt abgewickelt und der Fertigwalzstraße zugeführt wird. Auf diese Weise können Wärmeverluste des Vorprodukts vor dem Einbringen des Vorprodukts in die Fertigwalzstraße gering gehalten werden, insbesondere wenn das Vorprodukt für eine gewisse Zeit zwischen der Vorwalzstraße und der Fertigwalzstraße verweilt, zum Beispiel weil die Fertigwalzstraße durch ein früher zugeführtes Vorwalzprodukt belegt ist.

Die erfindungsgemäße Fertigungsanlage zum Herstellen eines ein Austenit-Martensit-Mischgefüge aufweisenden Metallbandes aus einem Walzprodukt umfasst eine Kühlvorrichtung zum Abkühlen des Walzprodukts von einem ersten Temperaturwert, der oberhalb der Martensit Start-Temperatur des Walzprodukts liegt, auf einen zweiten Temperaturwert, der zwischen der Martensit-Starttemperatur und der Martensit-Stopptemperatur des Walzprodukts liegt. Erfindungsgemäß ist vorgesehen, dass die Fertigungsanlage ein Warmwalzwerk ist und die Kühlvorrichtung als Druckkühlanlage ausgebildet ist.

Zweckmäßigerweise handelt es sich bei dieser Fertigungsanlage um eine Anlage zur Durchführung des erfindungsgemäßen Verfahrens. Zudem können sich weiter oben im Zusammenhang mit dem Verfahren beschriebene Ausführungsformen, Ausführungsdetails und Vorteile auch auf die Fertigungsanlage beziehen.

Die Fertigungsanlage kann eine oder mehrere Walzstraßen, insbesondere eine Vorwalzstraße sowie eine Fertigwalzstraße, umfassen. Vorzugsweise ist besagte Kühlvorrichtung der Fertigungsanlage in Förderrichtung der Fertigungsanlage hinter der/den Walzstraße/-n der Fertigungsanlage angeordnet. Ferner ist es vorteilhaft, wenn die Fertigungsanlage eine Steuer- oder Regeleinrichtung mit einem Steuer- oder Regelmodell zum Steuern oder Regeln einer Kühlwirkung der Kühlvorrichtung, insbesondere in Abhängigkeit eines oder mehrerer Walzproduktparameter, aufweist.

Vorzugsweise ist die Steuer- oder Regeleinrichtung dazu eingerichtet, eine Kühlwirkung der Kühlvorrichtung derart zu steuern oder zu regeln, dass das Walzprodukt mithilfe der Kühlvorrichtung vom ersten Temperaturwert, der oberhalb der Martensit-Starttemperatur des Walzprodukts liegt, auf den zweiten Temperaturwert, der zwischen der Martensit-Starttemperatur und der Martensit-Stopptemperatur des Walzprodukts liegt, abkühlbar ist.

Vorteilhafterweise ist die Kühlvorrichtung dazu geeignet, mindestens 10 Liter Kühlmittel pro Sekunde und Quadratmeter, besonders bevorzugt mindestens 30 Liter Kühlmittel pro Sekunde und Quadratmeter, auf das Walzprodukt aufzubringen. Dadurch kann eine vergleichsweise schnelle Abkühlung des Walzprodukts sichergestellt werden.

Die Kühlvorrichtung der Fertigungsanlage kann mit mindestens einem Kühlbalken, vorzugsweise mit mehreren Kühlbalken, ausgestattet sein. Insbesondere kann die Kühlvorrichtung einen oder mehrere obere Kühlbalken zum Aufbringen des Kühlmittels auf die Oberseite des Walzprodukts und/oder einen oder mehrere untere Kühlbalken zum Aufbringen des Kühlmittels auf die Unterseite des Walzprodukts umfassen.

Vorzugsweise ist der jeweilige Kühlbalken mit einer Mehrzahl von Vollstrahldüsen zum Aufbringen eines Kühlmittels auf das Walzprodukt ausgestattet. Vollstrahldüsen sind aufgrund ihrer einfachen Geometrie vergleichsweise robust und zudem relativ günstig in der Herstellung. Darüber hinaus kann mithilfe einer Vollstrahldüse ein geschlossener, stabiler und energiereicher (Kühlmittel-)Vollstrahl erzeugt werden, welcher über seinen Durchmesser hinweg eine homogene Impulsverteilung aufweist und sich über eine große Länge hinweg nicht oder nur kaum aufweitet. Ein solcher (Kühlmittel-)Vollstrahl ist vorteilhaft, um eine sich auf dem Walzprodukt ausbildende (Kühlmittel-)Dampfschicht zu zerschlagen bzw. die Ausbildung einer solchen Dampfschicht zu verhindern und so die Entstehung des Leidenfrost-Effektes zu vermeiden.

Besonders bevorzugt sind die Vollstrahldüsen derart ausgebildet, dass sich ein von der jeweiligen Vollstrahldüse erzeugter Vollstrahl selbst noch bei einem Kühlmitteldruck von 10 bar über eine große Länge hinweg nicht oder nur kaum aufweitet.

Die Vollstrahldüsen des jeweiligen Kühlbalkens haben vorzugsweise einen Abstand von höchstens 70 mm, besonders bevorzugt höchstens 50 mm, zueinander. Beispielsweise können die Vollstrahldüsen des jeweiligen Kühlbalkens einen Abstand von 25 mm zueinander aufweisen. Dadurch lässt sich eine relativ gleichmäßige Beaufschlagung des Walzprodukts mit Kühlmittel realisieren.

Zweckmäßigerweise hat die jeweilige Vollstrahldüse einen Hohlraum, insbesondere einen axialsymmetrischen Hohlraum, zum Führen und Auslassen des Kühlmittels. Vorteilhafterweise befindet sich die engste Stelle des Hohlraums am auslassseitigen Ende der jeweiligen Vollstrahldüse.

Der Hohlraum der jeweiligen Vollstrahldüse hat ein seinem auslassseitigen Ende vorzugsweise einen Durchmesser von höchstens 20 mm, besonders bevorzugt höchstens 12 mm. Zum Beispiel kann Hohlraum der jeweiligen Vollstrahldüse an seinem auslassseitigen Ende einen Durchmesser zwischen 2 mm und 6 mm, vorzugsweise einen Durchmesser von 4 mm, aufweisen.

Des Weiteren kann die Kühlvorrichtung der Fertigungsanlage eine oder mehrere Druckerhöhungspumpen aufweisen, welche mit dem oder den Kühlbalken der Kühlvorrichtung verbunden ist/sind. Die Druckerhöhungspumpe/-n sorgen vorteilhafterweise dafür, dass der/die Kühlbalken der Kühlvorrichtung eingangsseitig mit einem Kühlmitteldruck von mindestens 1 bar, vorzugsweise mindestens 2 bar, beaufschlagt werden.

Alternativ oder zusätzlich zu der/den Druckerhöhungspumpe/-n kann die Kühlvorrichtung der Fertigungsanlage einen oder mehrere Hochtanks zur Versorgung des Kühlbalkens bzw. der Kühlbalken der Kühlvorrichtung mit einem Kühlmittel aufweisen. Vorzugsweise kann der jeweilige Hochtank einen hydrostatischen Druck von mindestens 0,75 bar, vorzugsweise mindestens 1 bar, am Kühlmitteleingang des jeweiligen Kühlbalkens bereitstellen.

Ferner kann die Fertigungsanlage mit einer Heizeinrichtung, insbesondere einer induktiven Heizeinrichtung, zum Erwärmen des Walzprodukts ausgestattet sein. In bevorzugter Weise ist die Heizeinrichtung in Förderrichtung der Fertigungsanlage hinter der Kühlvorrichtung angeordnet.

Vorteilhafterweise ist die zuvor erwähnte Steuer- oder Regeleinrichtung dazu eingerichtet, eine Heizwirkung der Heizeinrichtung zu steuern oder zu regeln, insbesondere derart, dass das Walzprodukt mithilfe der Heizeinrichtung von einem Temperaturwert (genannt Quenching Temperatur), der zwischen der Martensit-Starttemperatur und der Martensit-Stopptemperatur liegt, auf einen höheren Temperaturwert, der zwischen der Martensit-Starttemperatur und der Martensit-Stopptemperatur liegt, oder auf einen Temperaturwert oberhalb der Martensit-Starttemperatur aufheizbar ist.

Des Weiteren kann die Fertigungsanlage eine weitere Kühlvorrichtung zum Abkühlen des Walzprodukts auf einen Temperaturwert, welcher unterhalb der Martensit-Stopptemperatur liegt, umfassen. Die weitere Kühlvorrichtung kann beispielsweise als Druckkühlanlage oder als ein mit einem Kühlmittel gefülltes Kühlbecken ausgebildet sein.

In dem Fall, dass die weitere Kühlvorrichtung der Fertigungsanlage eine Druckkühlanlage ist, ist die Steuer- oder Regeleinrichtung vorteilhafterweise dazu eingerichtet, eine Kühlwirkung der weiteren Kühlvorrichtung zu steuern oder zu regeln, insbesondere derart, dass das Walzprodukt mithilfe der weiteren Kühlvorrichtung von einem Temperaturwert, der zwischen der Martensit-Starttemperatur und der Martensit-Stopptemperatur liegt, auf einen Temperaturwert unterhalb der Martensit-Stopptemperatur abkühlbar ist.

Ferner können sich, falls die weitere Kühlvorrichtung der Fertigungsanlage eine Druckkühlanlage ist, die weiter oben genannten Merkmale, welche sich auf die erstgenannte Kühlvorrichtung der Fertigungsanlage beziehen, auch auf die weitere Kühlvorrichtung beziehen. Insbesondere kann die weitere Kühlvorrichtung baugleich zur erstgenannten Kühlvorrichtung ausgebildet sein.

Es kann vorgesehen sein, dass die Fertigungsanlage eine zwischen ihrer Vorwalzstraße und ihrer Fertigwalzstraße angeordnete Coilbox zum Aufwickeln eines Vorprodukts aufweist. Bei der Coilbox kann es sich insbesondere um eine sogenannte dornlose Coilbox handeln. Gegebenenfalls kann die Coilbox mit einem oder mehreren Heizelementen zum Beheizen des Vorprodukts ausgestattet sein.

Alternativ zu der Coilbox kann die Fertigungsanlage zwischen ihrer Vorwalzstraße und ihrer Fertigwalzstraße eine Heizeinrichtung, insbesondere eine induktive Heizeinrichtung, aufweisen, mittels welcher ein mithilfe der Vorwalzstraße erzeugtes Vorprodukt beheizt wird, bevor das Vorprodukt der Fertigwalzstraße zugeführt wird, ohne dass das Vorprodukt dabei aufgewickelt wird.

Zweckmäßigerweise ist die Steuer- oder Regeleinrichtung mittels einer Software, die in der Steuer-oder Regeleinrichtung hinterlegt ist, dazu eingerichtet, die Kühlvorrichtung und/oder die optionale weitere Kühlvorrichtung und/oder die optionale Heizeinrichtung in der oben beschriebenen Weise zu steuern oder zu regeln. Das zuvor erwähnte Steuer-/Regelmodell der Steuer- oder Regeleinrichtung ist vorzugsweise in der Software implementiert.

Wie eingangs erwähnt, betrifft die Erfindung auch eine Gießwalzverbundanlage (in Fachkreisen zum Teil auch als Gießwalzanlage bezeichnet).

Die erfindungsgemäße Gießwalzverbundanlage umfasst eine Fertigungsanlage der zuvor beschriebenen Art, d. h. eine erfindungsgemäße Fertigungsanlage.

Die bisher gegebene Beschreibung bevorzugter Ausgestaltungen der Erfindung enthält zahlreiche Merkmale, die in den einzelnen abhängigen Ansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren, der erfindungsgemäßen Fertigungsanlage und der erfindungsgemäßen Gießwalzverbundanlage kombinierbar. Ferner können Verfahrensmerkmale auch als Eigenschaft der entsprechenden Vorrichtungseinheit angesehen werden.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Figuren näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: eine erste Gießwalzverbundanlage, die unter anderem eine Druckkühlanlage aufweist;
- FIG 2: einen Querschnitt eines mittels der Gießwalzverbundanlage aus FIG 1 erzeugten Walzprodukts sowie einen Teil der Druckkühlanlage dieser Gießwalzverbundanlage;
- FIG 3: ein Temperatur-Zeit-Diagramm, welches einen zeitlichen Temperaturverlauf des Walzprodukts im Betrieb der Gießwalzverbundanlage aus FIG 1 wiedergibt;
- FIG 4: eine zweite Gießwalzverbundanlage, die unter anderem zwei Druckkühlanlagen aufweist;
- FIG 5: ein Temperatur-Zeit-Diagramm, welches einen zeitlichen Temperaturverlauf eines mittels der Gießwalzverbundanlage aus FIG 4 erzeugten Walzprodukts im Betrieb dieser Gießwalzverbundanlage wiedergibt;
- FIG 6: eine dritte Gießwalzverbundanlage, die unter anderem zwei Druckkühlanlagen sowie eine zwischen den Druckkühlanlagen angeordnete Heizeinrichtung aufweist;
- FIG 7: ein Temperatur-Zeit-Diagramm, welches einen zeitlichen Temperaturverlauf eines mittels der Gießwalzverbundanlage aus FIG 6 erzeugten Walzprodukts im Betrieb dieser Gießwalzverbundanlage wiedergibt;
- FIG 8: eine vierte Gießwalzverbundanlage, die unter anderem eine Druckkühlanlage, eine hinter der Druckkühlanlage angeordnete Heizeinrichtung sowie ein mit einem Kühlmittel befülltes Kühlbecken aufweist;
- FIG 9: ein Temperatur-Zeit-Diagramm, welches einen zeitlichen Temperaturverlauf eines mittels der Gießwalzverbundanlage aus FIG 8 erzeugten Walzprodukts im Betrieb dieser Gießwalzverbundanlage wiedergibt;
- FIG 10: ein Warmwalzwerk mit einer Vorwalzstraße, einer Fertigwalzstraße sowie einer zwischen den beiden Walzstraßen angeordneten Coilbox.

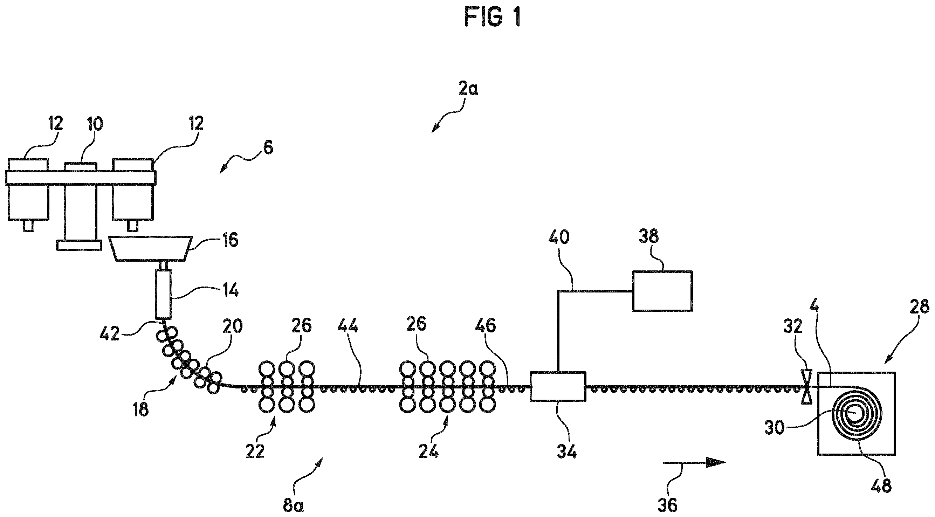

FIG 1 zeigt schematisch eine erste Gießwalzverbundanlage 2a. Diese wird dazu eingesetzt, ein Metallband 4 herzustellen, welches ein Austenit-Martensit-Mischgefüge aufweist.

Die Gießwalzverbundanlage 2a umfasst eine Gießanlage 6 sowie eine der Gießanlage 6 prozesstechnisch nachgeschaltete Fertigungsanlage 8a. Bei Letzterer handelt es sich um ein Warmwalzwerk.

Die Gießanlage 6 ist eine Stranggießanlage und umfasst einen Pfannendrehturm 10, in den zwei austauschbare Gießpfannen 12 eingesetzt sind, sowie eine Kokille 14 mit einer (figürlich nicht dargestellten) Primärkühleinrichtung. Außerdem umfasst die Gießanlage 6 einen Verteiler 16 zum Aufnehmen einer Metallschmelze aus den Gießpfannen 12 und zum Weiterleiten der Metallschmelze zu der Kokille 14. Des Weiteren verfügt die Gießanlage 6 über ein Strangführungssystem 18 mit einer (figürlich nicht dargestellten) Sekundärkühleinrichtung und mehreren Strangführungsrollen 20.

Die Fertigungsanlage 8a umfasst eine Vorwalzstraße 22 sowie eine Fertigwalzstraße 24. Im vorliegenden Ausführungsbeispiel umfasst die Vorwalzstraße 22 drei Walzgerüste 26, während die Fertigwalzstraße 24 fünf Walzgerüste 26 umfasst, wobei die jeweilige Walzstraße 22, 24 grundsätzlich eine andere Anzahl von Walzgerüsten 26 aufweisen kann.

Weiter umfasst die Fertigungsanlage 8a eine Haspeleinrichtung 28 mit einem Haspeldorn 30 sowie eine zwischen der Fertigwalzstraße 24 und der Haspeleinrichtung 28 angeordnete, insbesondere als Schere ausgebildete Trennvorrichtung 32.

Darüber hinaus umfasst die Fertigungsanlage 8a eine Kühlvorrichtung 34, bei der es sich um eine Druckkühlanlage handelt. Die Kühlvorrichtung 34 ist zwischen der Fertigwalzstraße 24 und der Trennvorrichtung 32 angeordnet. Das heißt, die Kühlvorrichtung 34 ist in Förderrichtung 36 der Fertigungsanlage 8a hinter der Fertigwalzstraße 24 angeordnet.

Gegebenenfalls kann die Fertigungsanlage 8a zwischen der Fertigwalzstraße 24 und der Trennvorrichtung 32 zusätzlich eine (figürlich nicht dargestellte) Laminarkühlanlage aufweisen.

Weiter umfasst die Fertigungsanlage 8a eine Steuer- oder Regeleinrichtung 38, die über (figürlich nicht dargestellte) Signalleitungen mit der Gießanlage 6 sowie den beiden Walzstraßen 22, 24 verbunden ist und den Gieß- sowie den Walzprozess steuert oder regelt. Ferner ist die Steuer- oder Regeleinrichtung 38 über eine Signalleitung 40 mit der Kühlvorrichtung 34 verbunden.

Mithilfe der Gießanlage 6 wird aus einer Metallschmelze (durch Abkühlen der Metallschmelze in der Kokille 14) ein Metallstrang 42 hergestellt, der mithilfe des Strangführungssystems 18 zu den Walzstraßen 22, 24 geführt wird. Aus dem Metallstrang 42 wird mithilfe der Vorwalzstraße 22 durch Warmwalzen ein warmgewalztes Vorprodukt 44 erzeugt. Aus dem Vorprodukt 44 wird dann mithilfe der Fertigwalzstraße 24 durch Warmwalzen ein Walzprodukt 46 erzeugt, welches vorzugsweise eine Dicke von maximal 3 mm aufweist. Im vorliegenden Ausführungsbeispiel handelt es sich bei dem Walzprodukt 46 um ein Warmband, genauer gesagt um ein Endloswarmband.

Der Metallstrang 42, aus dem das Walzprodukt 46 hergestellt wird, ist ein Stahlstrang. Entsprechend handelt es sich bei dem Walzprodukt 46 um ein Warmband aus Stahl.

Ein Teil des Walzprodukts 46 wird der Haspeleinrichtung 28 zugeführt, mittels der Trennvorrichtung 32 vom restlichen Teil des Walzprodukts 46 abgetrennt und mithilfe der Haspeleinrichtung 28 zu einem Bund 48 (in Fachkreisen auch Coil genannt) aufgewickelt.

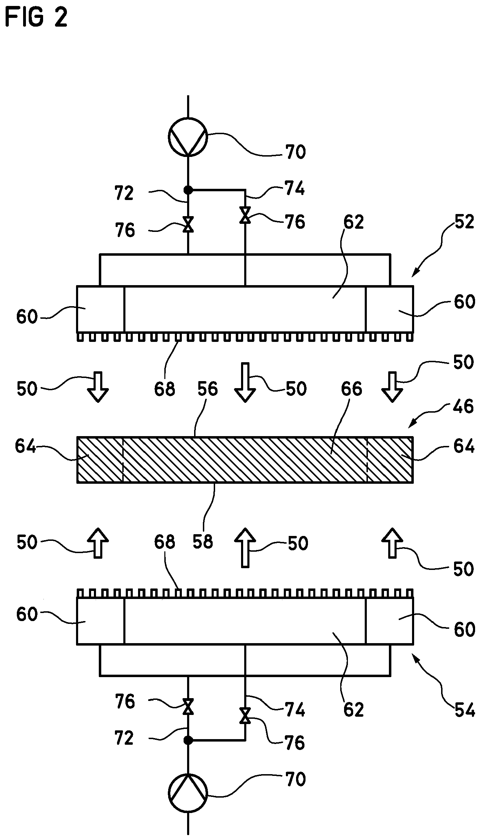

Nach dem Austritt aus der Fertigwalzstraße 24 weist das Walzprodukt 46 zunächst eine Temperatur auf, die oberhalb der Martensit-Starttemperatur des Walzprodukts 46 liegt. Bevor das Walzprodukt 46 - bezogen auf die Förderrichtung 36 der Fertigungsanlage 8a - der Haspeleinrichtung 28 zugeführt wird, wird das Walzprodukt 46 bei einem ersten Kühlvorgang mithilfe der zuvor erwähnten Kühlvorrichtung 34 derart abgekühlt, dass die Temperatur des Walzprodukts 46 auf einen Temperaturwert zwischen der Martensit-Starttemperatur und der Martensit-Stopptemperatur des Walzprodukts 46 gebracht wird. Hierbei wird mithilfe der Kühlvorrichtung 34 ein Kühlmittel 50, vorzugsweise Wasser, auf das Walzprodukt 46 aufgespritzt (vgl. FIG 2), wobei das Kühlmittel 50 mit einem Druck von mindestens 1 bar aus der Kühlvorrichtung 34 austritt.

Die Kühlwirkung der Kühlvorrichtung 34 wird von der Steuer-oder Regeleinrichtung 38 anhand eines Steuer- oder Regelmodells in Abhängigkeit mehrerer Walzproduktparameter gesteuert oder geregelt. Insbesondere wird die Kühlwirkung der Kühlvorrichtung 34 von der Steuer- oder Regeleinrichtung 38 derart gesteuert oder geregelt, dass eine Abweichung der Temperatur des Walzprodukts 46 von einer Temperatur-Sollkurve, welche einen Temperatur-Sollwert für die Temperatur des Walzprodukts 46 als Funktion der Zeit angibt, höchstens 15 °C beträgt.

Bei den Walzproduktparametern, in Abhängigkeit deren die Kühlwirkung der Kühlvorrichtung 34 von der Steuer- oder Regeleinrichtung 38 gesteuert oder geregelt wird, handelt es sich im vorliegenden Fall um die chemische Zusammensetzung des Walzprodukts 46, dessen Dicke, dessen Geschwindigkeit hinter der Fertigwalzstraße 24 und die Temperatur des Walzprodukts 46. Alternativ oder zusätzlich kann die Steuerung bzw. Regelung der Kühlwirkung der Kühlvorrichtung 34 in Abhängigkeit eines oder mehrerer anderer Parameter erfolgen.

Bei einem zweiten Kühlvorgang, der auf den ersten Kühlvorgang folgt, kühlt das Walzprodukt 46 an Umgebungsluft ab. Hierbei fällt die Temperatur des Walzprodukts 46 auf einen Temperaturwert unterhalb der Martensit-Stopptemperatur ab. Ein Teil der Abkühlung des Walzprodukts 46, die während des zweiten Kühlvorgangs stattfindet, erfolgt während sich das Walzprodukt 46 im aufgewickelten Zustand befindet.

Das auf Umgebungstemperatur abgekühlte Walzprodukt 46 bildet das zuvor erwähnte ein Austenit-Martensit-Mischgefüge aufweisende Metallband 4, welches mithilfe der Gießwalzverbundanlage 2a hergestellt wird.

FIG 2 zeigt schematisch einen Teil der (in FIG 1 vereinfacht in Form eines Rechtecks dargestellten) Kühlvorrichtung 34. In FIG 2 sind exemplarisch ein oberer Kühlbalken 52 sowie ein unterer Kühlbalken 54 der Kühlvorrichtung 34 abgebildet. Der obere Kühlbalken 52 dient dazu, das zuvor erwähnte Kühlmittel 50 auf die Oberseite 56 des Walzprodukts 46 aufzuspritzen, während der untere Kühlbalken 54 dazu dient, das Kühlmittel 50 auf die Unterseite 58 des Walzprodukts 46 aufzuspritzen.

Zusätzlich zu den beiden abgebildeten Kühlbalken 52, 54 kann die Kühlvorrichtung 34 einen oder mehrere (vorzugsweise mehrere) weitere obere Kühlbalken und/oder einen oder mehrere (vorzugsweise mehrere) weitere unterer Kühlbalken aufweisen, welche in Förderrichtung 36 des Walzprodukts 46 (vgl. FIG 1) beispielsweise vor oder hinter den beiden abgebildeten Kühlbalken 52, 54 angeordnet sein können. Darüber hinaus ist in FIG 2 das Walzprodukt 46 im Querschnitt dargestellt.

Der obere und der untere Kühlbalken 52, 54 weisen jeweils zwei seitliche Spritzeinheiten 60 sowie eine zwischen den beiden seitlichen Spritzeinheiten 60 angeordnete mittlere Spritzeinheit 62 auf. Die beiden seitlichen Spritzeinheiten 60 des jeweiligen Kühlbalkens 52, 54 dienen dazu, das Kühlmittel 50 auf die seitlichen Randbereiche 64 des Walzprodukts 46 aufzuspritzen, während die mittlere Spritzeinheit 62 des jeweiligen Kühlbalkens 52, 54 dazu dient, das Kühlmittel 50 auf den zwischen den Randbereichen 64 angeordneten Mittelbereich 66 des Walzprodukts 46 aufzuspritzen.

Jede der Spritzeinheiten 60, 62 umfasst mehrere Vollstrahldüsen 68 sowie eine eigene (figürlich nicht dargestellte) interne Kühlmittelverteilkammer, die ausgangsseitig mit den Vollstrahldüsen 68 verbunden ist.

Ferner weist die Kühlvorrichtung 34 für den oberen Kühlbalken 52 sowie für den unteren Kühlbalken 54 jeweils eine Druckerhöhungspumpe 70 auf, welche eingangsseitig mit einem (figürlich nicht dargestellten) Kühlmittelspeicher verbunden ist. Sowohl bei dem oberen Kühlbalken 52 als auch bei dem unteren Kühlbalken 54 sind die beiden seitlichen Spritzeinheiten 60 über eine gemeinsame Kühlmittelversorgungsleitung 72 mit der zugehörigen Druckerhöhungspumpe 70 verbunden, während die mittlere Spritzeinheit 62 über eine weitere Kühlmittelversorgungsleitung 74 mit derselben Druckerhöhungspumpe 70 verbunden ist. Besagte Kühlmittelversorgungsleitungen 72, 74 sind jeweils mit einem Ventil 76 zur Steuerung des Kühlmittelvolumenstroms in der jeweiligen Kühlmittelversorgungsleitung 72, 74 ausgestattet.

Die Ventile 76 haben vorzugsweise eine lineare oder annähernd lineare Volumenstrom-Kennlinie. Zudem haben die Ventile 76 vorzugsweise eine geringe Hysterese, beispielsweise von maximal 3%. Als Ventiltypen können zum Beispiel Kugelsegmentventile oder Kegelsitzventile zum Einsatz kommen. Solche Ventile ermöglichen eine besonders präzise Einstellung des Kühlmittelvolumenstroms in der jeweiligen Kühlmittelversorgungsleitung 72, 74.

Die Druckerhöhungspumpen 70 sowie die Ventile 76 sind über (figürlich nicht dargestellte) Steuerleitungen mit der zuvor erwähnten Steuer- oder Regeleinrichtung 38 (vgl. FIG 1) verbunden und werden von dieser gesteuert oder geregelt.

Im vorliegenden Ausführungsbeispiel werden die Druckerhöhungspumpen 70 derart von der Steuer- oder Regeleinrichtung 38 gesteuert oder geregelt, dass der Kühlmittelvolumenstrom, mit dem die Unterseite 58 des Walzprodukts 46 vom unteren Kühlbalken 54 beaufschlagt wird, größer ist als der Kühlmittelvolumenstrom, mit dem die Oberseite 56 des Walzprodukts 46 vom oberen Kühlbalken 52 beaufschlagt wird. Auf diese Weise wird (zumindest teilweise) kompensiert, dass das Kühlmittel 50 an der Unterseite 58 des Walzprodukts 46 eine kürzere Verweildauer hat als an der Oberseite 56 des Walzprodukts 46. Beispielsweise kann der Kühlmittelvolumenstrom, mit dem die Unterseite 58 des Walzprodukts 46 beaufschlagt wird, 115% desjenigen Kühlmittelvolumenstroms betragen, mit welchem die Oberseite 56 des Walzprodukts 46 beaufschlagt wird.

Darüber hinaus werden die Ventile 76 von der Steuer- oder Regeleinrichtung 38 so gesteuert oder geregelt, dass die seitlichen Randbereiche 64 des Walzprodukts 46 pro Flächeneinheit mit einem geringeren Kühlmittelvolumenstrom beaufschlagt werden als der Mittelbereich 66 des Walzprodukts 46. Auf diese Weise wird (zumindest teilweise) kompensiert, dass, die beiden seitlichen Randbereiche 64 des Walzprodukts 46 im Vergleich zum Mittelbereich 66 des Walzprodukts 46 schneller auskühlen.

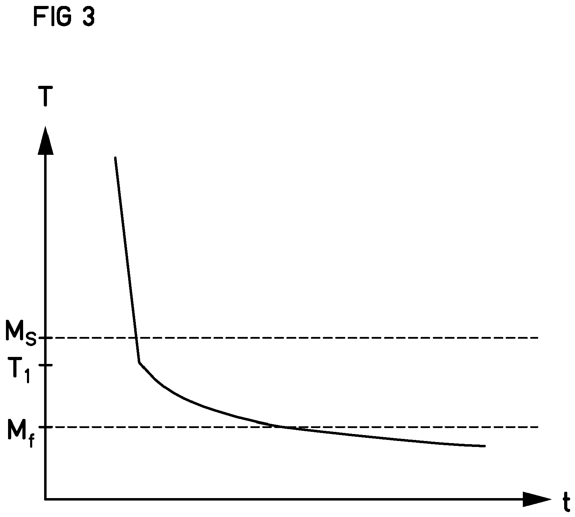

FIG 3 zeigt ein qualitatives Temperatur-Zeit-Diagramm, welches im Betrieb der Gießwalzverbundanlage 2a die Temperatur T des Walzprodukts 46 an einer Stelle des Walzprodukts 46 - nach Durchlaufen der beiden Walzstraßen 22, 24 - als Funktion der Zeit t wiedergibt.

Zunächst liegt die Temperatur T des Walzprodukts 46 oberhalb der Martensit-Starttemperatur Mₛ des Walzprodukts 46. Insbesondere kann die Temperatur T des Walzprodukts 46 zunächst über der Ferrit-Starttemperatur liegen, welche höher ist als die Martensit-Starttemperatur Mₛ. Beim ersten Kühlvorgang erfolgt ein rasches Abkühlen des Walzprodukts 46, wobei die Temperatur T des Walzprodukts 46 auf den Temperaturwert T₁, der unterhalb der Martensit-Starttemperatur Mₛ liegt, abfällt. Beim nachfolgenden zweiten Kühlvorgang, also beim Abkühlenlassen des Walzprodukts 46 an Umgebungsluft, kühlt das Walzprodukt 46 langsam ab, wobei die Temperatur T des Walzprodukts 46 unter die Martensit-Stopptemperatur M_{f} abfällt.

Die Beschreibungen der nachfolgenden Ausführungsbeispiele beschränken sich jeweils primär auf die Unterschiede zum Ausführungsbeispiel aus FIG 1 bis 3, auf welches bezüglich gleicher Merkmale und Funktionen verwiesen wird. Gleiche und/oder einander entsprechende Elemente sind, soweit zweckdienlich, mit den gleichen Bezugszeichen bezeichnet. Merkmale des vorhergehenden Ausführungsbeispiels sind in den nachfolgenden Ausführungsbeispielen übernommen, ohne dass sie erneut beschrieben werden.

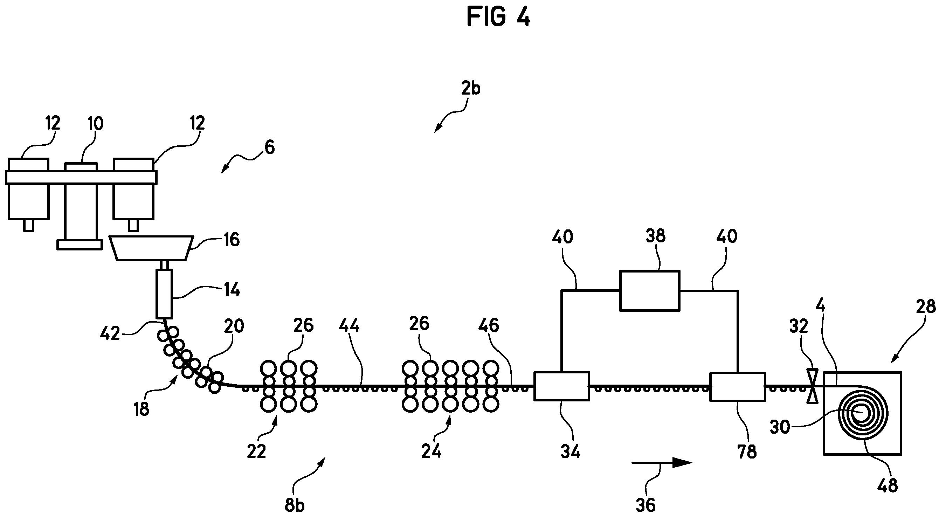

FIG 4 zeigt schematisch eine zweite Gießwalzverbundanlage 2b.

Die zweite Gießwalzverbundanlage 2b umfasst eine Fertigungsanlage 8b, bei welcher es sich auch im vorliegenden Ausführungsbeispiel um ein Warmwalzwerk handelt. Diese Fertigungsanlage 8b entspricht im Wesentlichen der Fertigungsanlage 8a der ersten Gießwalzverbundanlage 2a aus FIG 1. Bei der zweiten Gießwalzverbundanlage 2b umfasst die Fertigungsanlage 8b jedoch zusätzlich zwischen ihrer Fertigwalzstraße 24 und ihrer Trennvorrichtung 32 eine weitere als Druckkühlanlage ausgebildete Kühlvorrichtung 78, welche insbesondere baugleich zu der ersten Kühlvorrichtung 34 sein kann.

Wie aus FIG 4 ersichtlich ist, ist die weitere Kühlvorrichtung 78 in Förderrichtung 36 der Fertigungsanlage 8b hinter der ersten Kühlvorrichtung 34 angeordnet. Das Walzprodukt 46 kann mittels der ersten Kühlvorrichtung 34 ein erstes Mal und mittels der weiteren Kühlvorrichtung 78 ein zweites Mal abgekühlt werden. Ferner ist die weitere Kühlvorrichtung 78 über eine Signalleitung 40 mit der Steuer- oder Regeleinrichtung 38 verbunden und wird von dieser gesteuert oder geregelt.

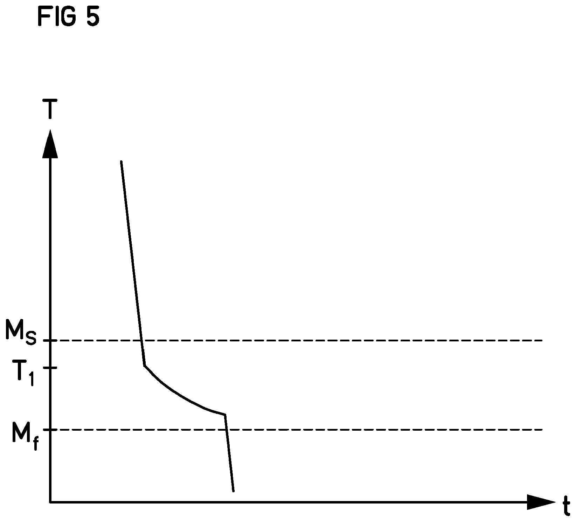

FIG 5 zeigt ein qualitatives Temperatur-Zeit-Diagramm, welches im Betrieb der zweiten Gießwalzverbundanlage 2b die Temperatur T des Walzprodukts 46 an einer Stelle des Walzprodukts 46 - nach Durchlaufen der beiden Walzstraßen 22, 24 - als Funktion der Zeit t wiedergibt.

Zunächst liegt die Temperatur T des Walzprodukts 46 oberhalb der Martensit-Starttemperatur Mₛ des Walzprodukts 46. Bei einem ersten Kühlvorgang, der mithilfe der ersten Kühlvorrichtung 34 durchgeführt wird, erfolgt ein rasches Abkühlen des Walzprodukts 46, wobei die Temperatur T des Walzprodukts 46 auf den Temperaturwert T₁, der unterhalb der Martensit-Start-temperatur Mₛ liegt, abfällt.

Bei einem anschließenden zweiten Kühlvorgang kühlt das Walzprodukt 46 an Umgebungsluft ab, wobei die Temperatur T des Walzprodukts 46 langsam abfällt.

Danach folgt ein dritter Kühlvorgang, bei dem das Walzprodukt 46 mithilfe der weiteren Kühlvorrichtung 78, ein zweites Mal rasch abgekühlt wird, insbesondere mit der gleichen Kühlrate wie beim ersten Kühlvorgang. Beim dritten Kühlvorgang fällt die Temperatur T des Walzprodukts 46 unter die Martensit-Stopptemperatur M_{f} des Walzprodukts 46 ab.

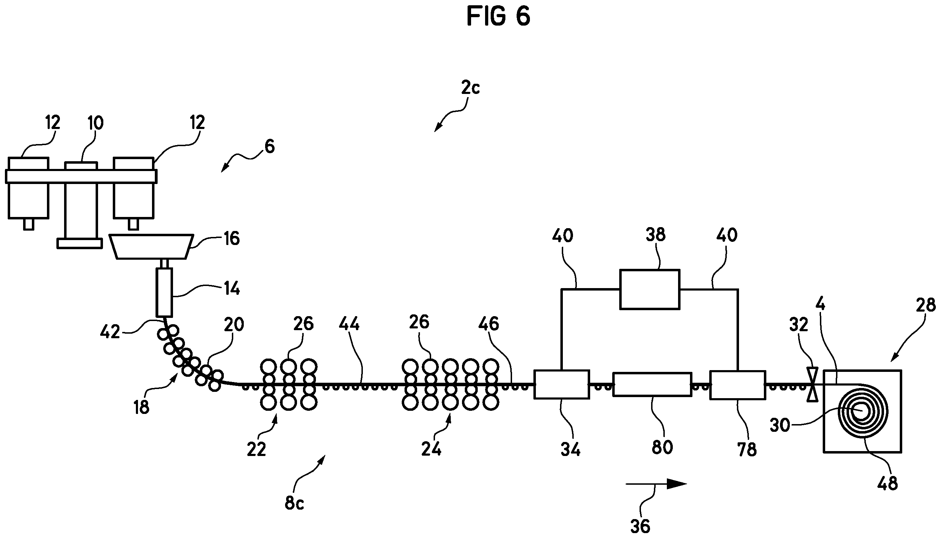

FIG 6 zeigt schematisch eine dritte Gießwalzverbundanlage 2c.

Die dritte Gießwalzverbundanlage 2c umfasst eine Fertigungsanlage 8c, bei welcher es sich auch im vorliegenden Ausführungsbeispiel um ein Warmwalzwerk handelt. Diese Fertigungsanlage 8c entspricht im Wesentlichen der Fertigungsanlage 8a der ersten Gießwalzverbundanlage 2a aus FIG 1. Bei der dritten Gießwalzverbundanlage 2c umfasst die Fertigungsanlage 8c jedoch zusätzlich zwischen ihrer Fertigwalzstraße 24 und ihrer Trennvorrichtung 32 eine weitere als Druckkühlanlage ausgebildete Kühlvorrichtung 78, welche insbesondere baugleich zu der ersten Kühlvorrichtung 34 sein kann.

Wie aus FIG 6 ersichtlich ist, ist die weitere Kühlvorrichtung 78 in Förderrichtung 36 der Fertigungsanlage 8c hinter der ersten Kühlvorrichtung 34 angeordnet. Das Walzprodukt 46 kann mittels der ersten Kühlvorrichtung 34 ein erstes Mal und mittels der weiteren Kühlvorrichtung 78 ein zweites Mal abgekühlt werden. Ferner ist die weitere Kühlvorrichtung 78 über eine Signalleitung 40 mit der Steuer- oder Regeleinrichtung 38 verbunden und wird von dieser gesteuert oder geregelt.

Darüber hinaus umfasst die Fertigungsanlage 8c der dritten Gießwalzverbundanlage 2c eine induktive Heizeinrichtung 80, welche zwischen den beiden Kühlvorrichtung 34, 78 angeordnet ist. Die Heizeinrichtung 80 ist ebenfalls über eine Signalleitung 40 mit der Steuer- oder Regeleinrichtung 38 verbunden und wird von dieser gesteuert. Mithilfe der Heizeinrichtung 80 kann das Walzprodukt 46 erwärmt, insbesondere nach einem Kühlvorgang wieder erwärmt, werden.

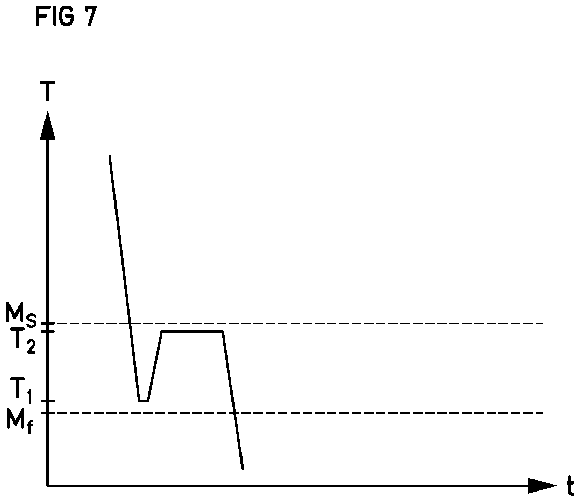

FIG 7 zeigt ein qualitatives Temperatur-Zeit-Diagramm, welches im Betrieb der dritten Gießwalzverbundanlage 2c die Temperatur T des Walzprodukts 46 an einer Stelle des Walzprodukts 46 - nach Durchlaufen der beiden Walzstraßen 22, 24 - als Funktion der Zeit t wiedergibt.

Zunächst liegt die Temperatur T des Walzprodukts 46 oberhalb der Martensit-Starttemperatur Mₛ des Walzprodukts 46. Bei einem ersten Kühlvorgang, der mithilfe der ersten Kühlvorrichtung 34 durchgeführt wird, erfolgt ein rasches Abkühlen des Walzprodukts 46, wobei die Temperatur T des Walzprodukts 46 auf den Temperaturwert T₁, der unterhalb der Martensit-Start-temperatur Mₛ liegt, abfällt.

Dann wird das Walzprodukt 46 mithilfe der Heizeinrichtung 80 wieder erwärmt, wobei die Temperatur T des Walzprodukts 46 auf den Temperaturwert T₂, der oberhalb des Temperaturwerts T₁ und unterhalb der Martensit-Starttemperatur Mₛ liegt, ansteigt.

Bei einem anschließenden zweiten Kühlvorgang wird das Walzprodukt 46 mithilfe der weiteren Kühlvorrichtung 78, ein zweites Mal rasch abgekühlt, insbesondere mit der gleichen Kühlrate wie beim ersten Kühlvorgang. Beim zweiten Kühlvorgang fällt die Temperatur T des Walzprodukts 46 unter die Martensit-Stopptemperatur M_{f} des Walzprodukts 46 ab.

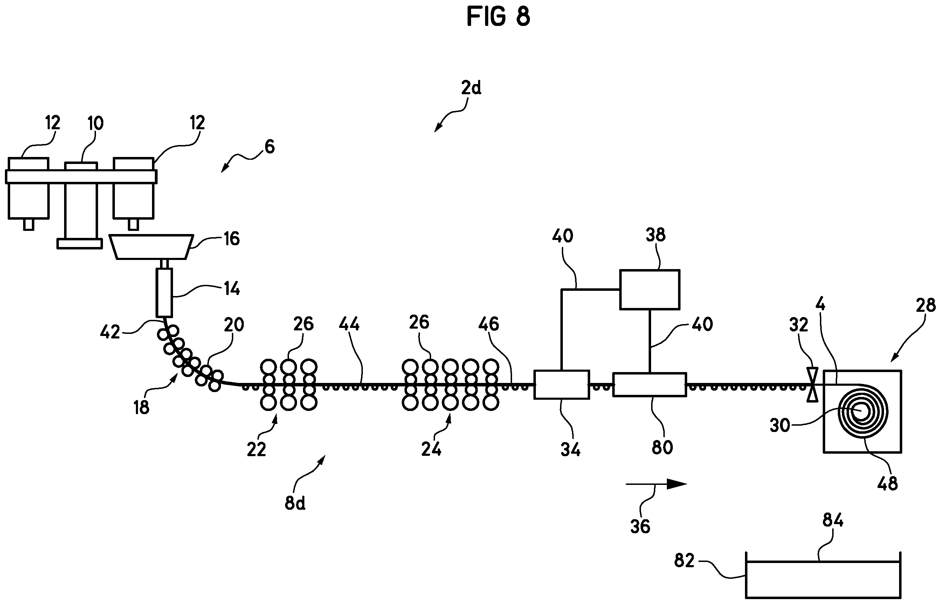

FIG 8 zeigt schematisch eine vierte Gießwalzverbundanlage 2d.

Die vierte Gießwalzverbundanlage 2d umfasst eine Fertigungsanlage 8d, bei welcher es sich auch im vorliegenden Ausführungsbeispiel um ein Warmwalzwerk handelt. Diese Fertigungsanlage 8d entspricht im Wesentlichen der Fertigungsanlage 8a der ersten Gießwalzverbundanlage 2a aus FIG 1. Bei der vierten Gießwalzverbundanlage 2d umfasst die Fertigungsanlage 8d jedoch eine induktive Heizeinrichtung 80, welche zwischen der Kühlvorrichtung 34 und der Trennvorrichtung 32 angeordnet ist. Die Heizeinrichtung 80 ist über eine Signalleitung 40 mit der Steuer- oder Regeleinrichtung 38 verbunden und wird von dieser gesteuert.

Außerdem umfasst die Fertigungsanlage 8d der vierten Gießwalzverbundanlage 2d ein Kühlbecken 82, welches mit einem flüssigen Kühlmittel 84, vorzugsweise Wasser, gefüllt ist.

Mithilfe der Heizeinrichtung 80 kann das Walzprodukt 46 erwärmt, insbesondere nach einem Kühlvorgang wieder erwärmt, werden. In dem Kühlbecken 82 kann das Walzprodukt 46, insbesondere im aufgewickelten Zustand, durch Eintauchen in das Kühlmittel 84 rasch abgekühlt werden.

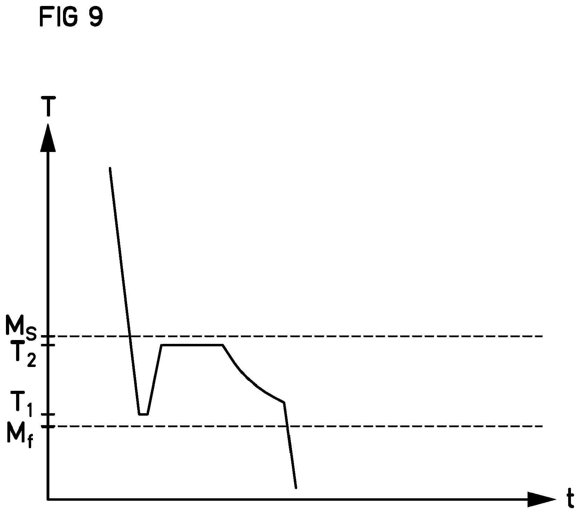

FIG 9 zeigt ein qualitatives Temperatur-Zeit-Diagramm, welches im Betrieb der vierten Gießwalzverbundanlage 2d die Temperatur T des Walzprodukts 46 an einer Stelle des Walzprodukts 46 - nach Durchlaufen der beiden Walzstraßen 22, 24 - als Funktion der Zeit t wiedergibt.

Zunächst liegt die Temperatur T des Walzprodukts 46 oberhalb der Martensit-Starttemperatur Mₛ des Walzprodukts 46. Bei einem ersten Kühlvorgang, der mithilfe ersten Kühlvorrichtung 34 durchgeführt wird, erfolgt ein rasches Abkühlen des Walzprodukts 46, wobei die Temperatur T des Walzprodukts 46 auf den Temperaturwert T₁, der unterhalb der Martensit-Starttemperatur Mₛ liegt, abfällt.

Dann wird das Walzprodukt 46 mithilfe der Heizeinrichtung 80 wieder erwärmt, wobei die Temperatur T des Walzprodukts 46 auf den Temperaturwert T₂, der oberhalb des Temperaturwerts T₁ und unterhalb der Martensit-Starttemperatur Mₛ liegt, ansteigt.

Bevor das Walzprodukt 46 im aufgewickelten Zustand, d. h. als Bund 48, aus der Haspeleinrichtung 28 entfernt wird, kühlt das Walzprodukt 46 bei einem anschließenden zweiten Kühlvorgang an Umgebungsluft ab, wobei die Temperatur T des Walzprodukts 46 langsam abfällt.

Bei einem anschließenden dritten Kühlvorgang wird das Walzprodukt 46 als Bund 48 durch Eintauchen in das Kühlbecken 82, genauer gesagt durch Eintauchen in das im Kühlbecken 82 befindliche Kühlmittel 84, ein zweites Mal rasch abgekühlt. Beim dritten Kühlvorgang fällt die Temperatur T des Walzprodukts 46 unter die Martensit-Stopptemperatur M_{f} des Walzprodukts 46 ab.

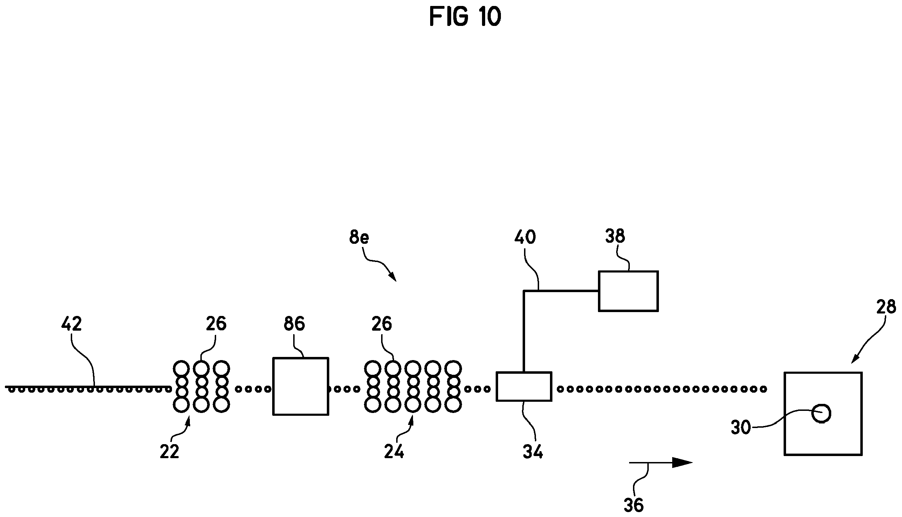

FIG 10 zeigt eine Fertigungsanlage 8e, bei welcher es sich um ein Warmwalzwerk handelt.

Anders als bei den vorangegangen Ausführungsbeispielen (siehe FIG 1 bis 9) ist die Fertigungsanlage 8e im vorliegenden Ausführungsbeispiel kein Bestandteil einer Gießwalzverbundanlage, sondern ein unabhängiges Warmwalzwerk.

Die Fertigungsanlage 8e aus FIG 10 entspricht im Wesentlichen der Fertigungsanlage 8a der ersten Gießwalzverbundanlage 2a aus FIG 1. Allerdings weist die Fertigungsanlage 8e zwischen ihrer Vorwalzstraße 22 und ihrer Fertigwalzstraße 24 eine Coilbox 86 auf. Zudem fehlt der Fertigungsanlage 8e eine Trennvorrichtung vor ihrer Haspeleinrichtung 28.

Der Fertigungsanlage 8e wird ein (bereits geschnittener) Metallstrang 42 zugeführt. Mithilfe der Vorwalzstraße 22 wird aus den Metallstrang 42 durch Warmwalzen ein warmgewalztes Vorprodukt erzeugt. Das Vorprodukt wird in der Coilbox 86 aufgewickelt, um Wärmeverluste des Vorprodukts vor dem Einbringen des Vorprodukts in die Fertigwalzstraße 24 gering zu halten. Wenn die Fertigwalzstraße 24 nicht (mehr) durch ein früher zugeführtes Vorwalzprodukt belegt ist, wird das besagte aufgewickelte Vorprodukt abgewickelt und der Fertigwalzstraße 24 zugeführt, in welcher aus dem Vorprodukt durch Warmwalzen ein Walzprodukt hergestellt wird.

Bei der Fertigungsanlage 8e wird das Walzprodukt nach seinem Austritt aus der Fertigwalzstraße 24 in der gleichen Weise wie beim Ausführungsbeispiel aus FIG 1 bis 3 mittels der als Druckkühlanlage ausgebildeten Kühlvorrichtung 34 abgekühlt und mittels der Haspeleinrichtung 28 aufgewickelt. Das abgekühlte, aufgewickelte Walzprodukt bildet ein Metallband mit einem Austenit-Martensit-Mischgefüge.

Optional kann die Fertigungsanlage 8e aus FIG 10 hinter ihrer Fertigwalzstraße 24 eine weitere Druckkühlanlage (vgl. FIG 4 oder FIG 6) oder ein mit einem Kühlmittel befülltes Kühlbecken (vgl. FIG 8) aufweisen, um das Walzprodukt ein zweites Mal rasch abzukühlen. Gegebenenfalls kann die Fertigungsanlage 8e aus FIG 10 zwischen ihrer Kühlvorrichtung 34 und der etwaigen weiteren Druckkühlanlage bzw. dem etwaigen Kühlbecken eine Heizeinrichtung aufweisen (vgl. FIG 6 oder FIG 8), um das Walzprodukt zwischen den Kühlvorgängen (wieder) zu erwärmen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste

- 2a: Gießwalzverbundanlage
- 2b: Gießwalzverbundanlage
- 2c: Gießwalzverbundanlage
- 2d: Gießwalzverbundanlage
- 4: Metallband
- 6: Gießanlage
- 8a: Fertigungsanlage/Warmwalzwerk
- 8b: Fertigungsanlage/Warmwalzwerk
- 8c: Fertigungsanlage/Warmwalzwerk
- 8d: Fertigungsanlage/Warmwalzwerk
- 8e: Fertigungsanlage/Warmwalzwerk
- 10: Pfannendrehturm
- 12: Gießpfanne
- 14: Kokille
- 16: Verteiler
- 18: Strangführungssystem
- 20: Strangführungsrolle
- 22: Vorwalzstraße
- 24: Fertigwalzstraße
- 26: Walzgerüst
- 28: Haspeleinrichtung
- 30: Haspeldorn
- 32: Trennvorrichtung
- 34: Kühlvorrichtung/Druckkühlanlage
- 36: Förderrichtung
- 38: Steuer- oder Regeleinrichtung
- 40: Signalleitung
- 42: Metallstrang
- 44: Vorprodukt
- 46: Walzprodukt/Warmband
- 48: Bund
- 50: Kühlmittel
- 52: Kühlbalken
- 54: Kühlbalken
- 56: Oberseite
- 58: Unterseite
- 60: Spritzeinheit
- 62: Spritzeinheit
- 64: Randbereich
- 66: Mittelbereich
- 68: Vollstrahldüse
- 70: Druckerhöhungspumpe
- 72: Kühlmittelversorgungsleitung
- 74: Kühlmittelversorgungsleitung
- 76: Ventil
- 78: Kühlvorrichtung/Druckkühlanlage
- 80: Heizeinrichtung
- 82: Kühlbecken
- 84: Kühlmittel
- 86: Coilbox

## Patentansprüche

1. Verfahren zum Herstellen eines ein Austenit-Martensit-Mischgefüge aufweisenden Metallbandes (4) aus einem Walzprodukt (46), bei dem das Walzprodukt (46), welches zunächst eine Temperatur (T) aufweist, die oberhalb der Martensit-Start-temperatur (Mₛ) des Walzprodukts (46) liegt, bei einem Kühlvorgang derart abgekühlt wird, dass die Temperatur (T) des Walzprodukts (46) auf einen Temperaturwert zwischen der Martensit-Starttemperatur (Mₛ) und der Martensit-Stopptemperatur (M_{f}) des Walzprodukts (46) gebracht wird,
**dadurch gekennzeichnet, dass** das Walzprodukt (46) ein Warmband ist und das Walzprodukt (46) bei dem Kühlvorgang mithilfe einer Druckkühlanlage (34) abgekühlt wird.

2. Verfahren nach Anspruch 1,
**dadurch gekennzeichnet, dass** eine Kühlwirkung der Druckkühlanlage (34) von einer Steuer- oder Regeleinrichtung (38) anhand eines Steuer- oder Regelmodells in Abhängigkeit eines oder mehrerer Walzproduktparameter gesteuert oder geregelt wird.

3. Verfahren nach Anspruch 2,
**dadurch gekennzeichnet, dass** es sich bei dem/den Walzproduktparameter/-n, um eine chemische Zusammensetzung des Walzprodukts (46) und/oder eine Geschwindigkeit des Walzprodukts (46) und/oder eine Dicke des Walzprodukts (46) und/oder die Temperatur (T) des Walzprodukts (46) handelt.

4. Verfahren nach Anspruch 2 oder 3,
**dadurch gekennzeichnet, dass** die Kühlwirkung der Druckkühlanlage (34) von der Steuer- oder Regeleinrichtung (38) derart gesteuert oder geregelt wird, dass eine Abweichung der Temperatur (T) des Walzprodukts (46) von einer Temperatur-Sollkurve höchstens 15 °C, vorzugsweise höchstens 10 °C, beträgt.

5. Verfahren nach einem der voranstehenden Ansprüche,
**dadurch gekennzeichnet, dass** von der Druckkühlanlage (34) zum Zwecke der Abkühlung des Walzprodukts (46) ein Kühlmittel (50) auf das Walzprodukt (46) aufgebracht wird, wobei das Kühlmittel (50) mit einem Druck von mindestens 0,75 bar, vorzugsweise mindestens 1 bar, besonders bevorzugt mindestens 2 bar, aus der Druckkühlanlage (34) austritt.

6. Verfahren nach einem der voranstehenden Ansprüche,
**dadurch gekennzeichnet, dass** das Walzprodukt (46) eine Dicke von höchstens 3 mm, vorzugsweise höchstens 1,5 mm, aufweist.

7. Verfahren nach einem der voranstehenden Ansprüche,
**dadurch gekennzeichnet, dass** das Walzprodukt (46) bei einem weiteren Kühlvorgang, der nach dem erstgenannten Kühlvorgang erfolgt, derart abgekühlt wird, dass die Temperatur (T) des Walzprodukts (46) auf einen Temperaturwert unterhalb der Martensit-Stopptemperatur (M_{f}) gebracht wird.

8. Verfahren nach Anspruch 7,
**dadurch gekennzeichnet, dass** das Walzprodukt (46) bei dem weiteren Kühlvorgang
- mithilfe einer weiteren Druckkühlanlage (78) abgekühlt wird und/oder
- durch Einbringen des Walzprodukts (46) in ein mit einem Kühlmittel (84) gefülltes Kühlbecken (82) abgekühlt wird, wobei das Walzprodukt (46) vor dem Einbringen in das Kühlbecken (82) zu einem Bund (48) aufgewickelt wird und im aufgewickelten Zustand in das Kühlbecken (82) eingebracht wird.

9. Verfahren nach Anspruch 7 oder 8,
**dadurch gekennzeichnet, dass** der weitere Kühlvorgang ein Abkühlenlassen des Walzprodukts (46) an Umgebungsluft ist oder umfasst.

10. Verfahren nach einem der Ansprüche 7 bis 9,
**dadurch gekennzeichnet, dass** das Walzprodukt (46) zwischen dem erstgenannten und dem weiteren Kühlvorgang bei einem Heizvorgang erwärmt wird.

11. Verfahren nach einem der voranstehenden Ansprüche,
**dadurch gekennzeichnet, dass** das Verfahren in einer Gießwalzverbundanlage (2a-2d) durchgeführt wird und das Walzprodukt (46) ein mithilfe der Gießwalzverbundanlage (2a-2d) hergestelltes Endlosmetallband ist.

12. Verfahren nach einem der Ansprüche 1 bis 10,
**dadurch gekennzeichnet, dass** das Verfahren in einem Warmwalzwerk (8e) durchgeführt wird, welches eine Vorwalzstraße (22), eine Fertigwalzstraße (24) sowie eine zwischen der Vorwalzstraße (22) und der Fertigwalzstraße (24) angeordnete Coilbox (86) umfasst, wobei ein mithilfe der Vorwalzstraße (22) warmgewalztes Vorprodukt (44), aus welchem mithilfe der Fertigwalzstraße (24) durch Warmwalzen das Walzprodukt (46) hergestellt wird, in der Coilbox (86) aufgewickelt wird und das aufgewickelte Vorprodukt (44) zu einem späteren Zeitpunkt abgewickelt und der Fertigwalzstraße (24) zugeführt wird.

13. Fertigungsanlage (8a-8e) zum Herstellen eines ein Austenit-Martensit-Mischgefüge aufweisenden Metallbandes (4) aus einem Walzprodukt (46), umfassend eine Kühlvorrichtung (34) zum Abkühlen des Walzprodukts (46) von einem ersten Temperaturwert, der oberhalb der Martensit-Starttemperatur (Mₛ) des Walzprodukts (46) liegt, auf einen zweiten Temperaturwert, der zwischen der Martensit-Starttemperatur (Mₛ) und der Martensit-Stopptemperatur (M_{f}) des Walzprodukts (46) liegt, **dadurch gekennzeichnet, dass** die Fertigungsanlage (8a-8e) ein Warmwalzwerk ist und die Kühlvorrichtung (34) als Druckkühlanlage ausgebildet ist.

14. Fertigungsanlage (8a-8e) nach Anspruch 13, **gekennzeichnet durch** eine Steuer- oder Regeleinrichtung (38) mit einem Steuer- oder Regelmodell zum Steuern oder Regeln einer Kühlwirkung der Kühlvorrichtung (34) in Abhängigkeit eines oder mehrerer Walzproduktparameter.

15. Fertigungsanlage (8a-8e) nach Anspruch 13 oder 14,
**dadurch gekennzeichnet, dass** die Kühlvorrichtung (34) mindestens einen Kühlbalken (52, 54), vorzugsweise mehrere Kühlbalken, umfasst, wobei der jeweilige Kühlbalken (52, 54) eine Mehrzahl von Vollstrahldüsen (68) zum Aufbringen eines Kühlmittels (50) auf das Walzprodukt (46) aufweist.

16. Fertigungsanlage (8b-8d) nach einem der Ansprüche 13 bis 15,
**gekennzeichnet durch** eine Heizeinrichtung (80), insbesondere eine induktive Heizeinrichtung, zum Erwärmen des Walzprodukts (46), welche in Förderrichtung (36) der Fertigungsanlage (8c, 8d) hinter der Kühlvorrichtung (34) angeordnet ist.

17. Fertigungsanlage (8c, 8d) nach einem der Ansprüche 13 bis 16,
**gekennzeichnet durch** eine weitere Kühlvorrichtung zum Abkühlen des Walzprodukts (46) auf einen Temperaturwert, der unterhalb der Martensit-Stopptemperatur (M_{f}) liegt, wobei die weitere Kühlvorrichtung als Druckkühlanlage (78) oder als ein mit einem Kühlmittel (84) gefülltes Kühlbecken (82) ausgebildet ist.

18. Fertigungsanlage (8e) nach einem der Ansprüche 13 bis 17,
**gekennzeichnet durch** eine Vorwalzstraße (22), eine Fertigwalzstraße (24) sowie eine zwischen der Vorwalzstraße (22) und der Fertigwalzstraße (24) angeordnete Coilbox (86) zum Aufwickeln eines Vorprodukts (44).

19. Gießwalzverbundanlage (2a-2d) mit einer Fertigungsanlage (8a-8d) nach einem der Ansprüche 13 bis 17.
